# EUROPÄISCHE PATENTSCHRIFT

(11) **EP 3 827 237 B1**
(45) Veröffentlichungstag und Bekanntmachung des Hinweises auf die Patenterteilung: **15.11.2023**
(21) Anmeldenummer: 19742345.2
(22) Anmeldetag: 17.07.2019
(51) Int. Cl.: G01L 19/06, B60T 8/32

(54) **BREMSZYLINDERANORDNUNG UND BREMSSYSTEM**
BRAKE CYLINDER ARRANGEMENT AND BRAKING SYSTEM
ENSEMBLE CYLINDRE DE FREIN ET SYSTÈME DE FREINAGE

(30) Priorität: 24.07.2018 DE 102018212320
(43) Veröffentlichungstag der Anmeldung: 02.06.2021
(73) Patentinhaber: Continental Automotive Technologies GmbH, 30165 Hannover (DE)
(72) Erfinder: BRIESEWITZ, Rüdiger, 60488 Frankfurt am Main (DE); DOLMAYA, Joseph, 60488 Frankfurt am Main (DE); BUSCHMANN, Gunther, 60488 Frankfurt am Main (DE)
(74) Vertreter: Continental Corporation
(86) Internationale Anmeldenummer: PCT/EP2019/069305
(87) Internationale Veröffentlichungsnummer: WO 2020/020732

(56) Entgegenhaltungen:
- EP-A1- 1 873 029
- EP-B1- 2 181 028
- DE-A1- 4 029 793
- DE-A1-102011 085 329
- DE-A1-102013 213 227
- JP-A- 2006 199 089
- US-A- 5 307 684

## Beschreibung

Die Erfindung betrifft eine Bremszylinderanordnung, wie sie beispielsweise in typischen Kraftfahrzeugen im Rahmen eines Bremssystems verwendet wird. Die Erfindung betrifft des Weiteren ein Bremssystem für ein Kraftfahrzeug mit einer solchen Bremszylinderanordnung.

Eine Bremszylinderanordnung weist typischerweise zumindest einen Bremszylinder auf. Dieser dient dazu, mittels eines verbundenen Bremspedals dem Fahrer die Möglichkeit zu geben, einen Druck im Bremssystem zu erzeugen. Dieser Druck kann beispielsweise auf einen Simulator wirken, elektronisch detektiert und dann in eine tatsächliche Bremsung umgesetzt werden, oder er kann auch unmittelbar auf Radbremsen wirken. Letzteres kann insbesondere im Fall einer hydraulischen Rückfallebene oder anderer Notfunktionalitäten der Fall sein.

Typischerweise wird ein Drucksensor verwendet, um den Druck in einem Bremszylinder zu überwachen. Hierbei tritt jedoch das Problem auf, dass in einem niedrigen Druckbereich bis etwa 70 bar eine hohe Auflösung nötig ist, grundsätzlich jedoch ein deutlich höherer Druckbereich bis beispielsweise etwa 280 bar zu überwachen ist, um eine Beschädigung des Bremszylinders durch die Einleitung von Notmaßnahmen zu verhindern. Hierzu können grundsätzlich zwei Sensoren verwendet werden, wobei jedoch insbesondere der hochauflösende Drucksensor für den niedrigeren Druckbereich gegen die hohen Drücke zu schützen ist. Dies hat sich als aufwändig und kostenintensiv herausgestellt.

Es ist deshalb eine Aufgabe der Erfindung, eine Bremszylinderanordnung bereitzustellen, welche diesbezüglich alternativ ausgeführt ist, beispielsweise im Hinblick auf die verwendete Drucksensorik. Es ist des Weiteren eine Aufgabe der Erfindung, ein Bremssystem für ein Kraftfahrzeug mit einer solchen Bremszylinderanordnung bereitzustellen.

Dies wird erfindungsgemäß durch eine Bremszylinderanordnung sowie ein Bremssystem gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft eine Bremszylinderanordnung wie in dem beigefügten unabhängigen Anspruch 1 definiert.

Die Bremszylinderanordnung weist einen Bremszylinder, einen Drucksensor und einen Druckminderer auf. Der Bremszylinder ist über den Druckminderer mit dem Drucksensor verbunden, um einen Druck im Bremszylinder abzufühlen. Der Druckminderer leitet bevorzugt in einem ersten Eingangsdruckbereich, welcher von 0 bar bis zu einem vorbestimmten Druckschwellenwert reicht, den Druck vom Bremszylinder zu dem Drucksensor mit einem ersten Modifizierungsfaktor, und leitet bevorzugt in einem zweiten Eingangsdruckbereich, welcher Drücke größer als der vorbestimmte Druckschwellenwert umfasst, den Druck, soweit er den Druckschwellenwert übersteigt, vom Bremszylinder zu dem Drucksensor mit einem zweiten Modifizierungsfaktor zuzüglich des am Druckschwellenwert weitergeleiteten Drucks.

Durch die Verwendung des Druckminderers genügt die Verwendung eines Drucksensors, welcher den gesamten erforderlichen Druckbereich überwachen und in einem niedrigen Druckbereich eine ausreichend hohe Auflösung bereitstellen kann. Hierzu kann der Druckminderer in geeigneter Weise konfiguriert werden, insbesondere durch die Wahl der beiden Modifizierungsfaktoren. Geeignete mögliche Ausführungen werden nachfolgend beschrieben werden.

Unter einer Weiterleitung mit einem Modifizierungsfaktor sei dabei insbesondere verstanden, dass der Druck vor der Weiterleitung mit dem Faktor multipliziert wird. Beträgt der erste Modifizierungsfaktor beispielsweise 0,7, so wird ein Eingangsdruck von 1 bar als 0,7 bar weitergeleitet. Beträgt der erste Modifizierungsfaktor beispielsweise 1, so wird der Druck im ersten Eingangsdruckbereich unverändert weitergeleitet.

Im zweiten Eingangsdruckbereich wird dabei bevorzugt nur derjenige Druck mit dem zweiten Modifizierungsfaktor multipliziert, welcher den Druckschwellenwert übersteigt. Die angegebene Berechnungsvorschrift ist so zu verstehen, dass der Eingangsdruck am Druckschwellenwert noch mit dem ersten Modifizierungsfaktor weitergeleitet wird und zu dem derart bestimmten weitergeleiteten Druck dann bei höheren Drücken der Druck addiert wird, welcher sich aus dem den Druckschwellenwert übersteigenden Druckanteil multipliziert mit dem zweiten Modifizierungsfaktor bestimmt. Beträgt der Druckschwellenwert also beispielsweise 80 bar, wird bei einem ersten Modifizierungsfaktor von 0,7 am Druckschwellenwert ein Druck von 56 bar weitergeleitet. Liegt ein Eingangsdruck von 100 bar an, so übersteig er den Druckschwellenwert um 20 bar. Beträgt der zweite Modifizierungsfaktor beispielsweise 0,5, so wird bei einem Eingangsdruck von 100 bar ein Druck von 56 bar + 20 bar * 0,5 = 66 bar weitergeleitet.

Es sei verstanden, dass Abweichungen aufgrund technischer Implementierung der Druckmodifizierung nicht aus dem Schutzbereich der Ansprüche führen.

Der vorbestimmte Druckschwellenwert hat bevorzugt einen Wert zwischen 60 bar und 80 bar, oder einen Wert von 70 bar. Ein solcher Wert ist für typische Hauptbremszylinder bzw. Bremssysteme geeignet.

Der erste Modifizierungsfaktor hat bevorzugt einen Wert von 1. Dies ermöglicht eine unmittelbare lineare Übertragung des Drucks vom Bremszylinder zu dem Drucksensor, so dass dieser ohne Verzerrung erfasst werden kann.

Der zweite Modifizierungsfaktor hat bevorzugt einen Wert kleiner 1. Dadurch können Drücke, welche über dem vorbestimmten Druckschwellenwert liegen, abgeschwächt an den Drucksensor weitergegeben werden, so dass für diesen ein geringerer maximaler Messbereich als der maximal im Bremszylinder zu erwartende Druck ausreicht. Typischerweise ist oberhalb des vorbestimmten Druckschwellenwerts keine so hohe Auflösung mehr erforderlich.

Der Druckminderer ist bevorzugt ein hydraulischer Druckminderer. Derartige Ausführungen sind bekannt und haben sich für die hier benötigte Funktionalität als vorteilhaft erwiesen.

Der Bremszylinder kann insbesondere ein Hauptbremszylinder eines Kraftfahrzeugs sein. In einer solchen Anwendung ist die hier beschriebene Bremszylinderanordnung besonders vorteilhaft anwendbar.

Der Drucksensor ist bevorzugt dazu konfiguriert, eine Berstschutzfunktion auszulösen, wenn der Druck einen vorbestimmten Sicherheitsschwellenwert erreicht. Der vorbestimmte Sicherheitsschwellenwert, welcher insbesondere am Drucksensor definiert wird, kann insbesondere unter Berücksichtigung des zweiten Modifizierungsfaktors sowie auch des Druckschwellenwerts und des ersten Modifizierungsfaktors festgelegt werden. Die Berstschutzfunktion kann beispielsweise einen Druckablass aus dem Bremszylinder ermöglichen, um eine Zerstörung anderer Komponenten zu verhindern.

Der Sicherheitsschwellenwert entspricht bevorzugt einem Eingangsdruck des Druckminderers zwischen 260 bar und 280 bar, oder 270 bar. Derartige Werte haben sich für typische Anwendungen als vorteilhaft erwiesen. Hierbei sind typischerweise insbesondere der zweite Modifizierungsfaktor sowie auch der Druckschwellenwert und der erste Modifizierungsfaktor zu berücksichtigen.

Die Erfindung betrifft des Weiteren ein Bremssystem für ein Kraftfahrzeug, wobei das Bremssystem eine Bremszylinderanordnung gemäß der Erfindung aufweist. Diesbezüglich kann auf alle hierin beschriebenen Ausführungen und Varianten zurückgegriffen werden. Des Weiteren weist das Bremssystem eine Anzahl von Bremsen auf, welche mit dem Bremszylinder der Bremszylinderanordnung verbunden sind. Dadurch kann eine vorteilhafte Betätigung der Bremsen erfolgen. Die weiter oben beschriebenen Vorteile können mit dem erfindungsgemäßen Bremssystem erreicht werden.

Weitere Merkmale und Vorteile wird der Fachmann dem nachfolgend mit Bezug auf die beigefügte Zeichnung beschriebenen Ausführungsbeispiel entnehmen. Dabei zeigen:
- Fig. 1:: ein Bremssystem gemäß der Erfindung, und
- Fig. 2:: eine Übertragungskennlinie des in Fig. 1 dargestellten Druckminderers.

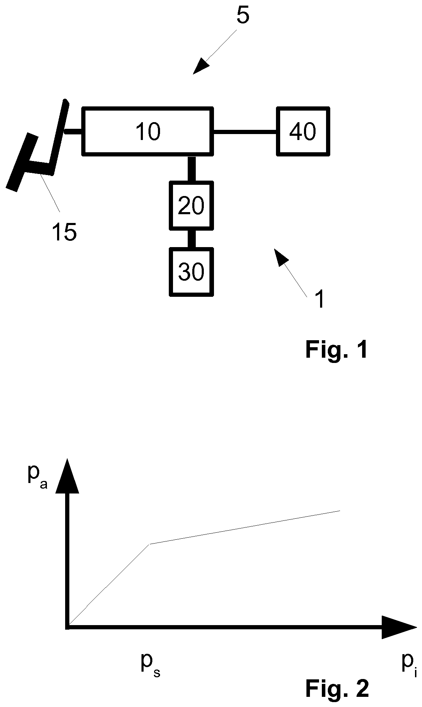

Fig. 1 zeigt ein Bremssystem 1 gemäß einem Ausführungsbeispiel der Erfindung. Das Bremssystem 1 weist eine Bremszylinderanordnung 5, ein Bremspedal 15 sowie eine Anzahl von Bremsen 40 auf. Es sei verstanden, dass diese Komponenten hier lediglich schematisch in einem Blockschaltbild dargestellt sind.

Die Bremszylinderanordnung 5 weist einen Bremszylinder 10 auf, welcher mit dem Bremspedal 15 verbunden ist. Dadurch kann ein Fahrer durch Betätigen des Bremspedals 15 einen Druck im Bremszylinder 10 erzeugen. Damit können die Bremsen 40 betätigt werden.

Die Bremszylinderanordnung 5 weist ferner einen Druckminderer 20 und einen Drucksensor 30 auf. Wie gezeigt ist der Drucksensor 30 über den Druckminderer 20 an dem Bremszylinder 10 angeschlossen.

Der Druckminderer 20 weist die in Fig. 2 dargestellte Transferkennlinie auf. Dabei ist auf der horizontalen Achse der Eingangsdruck pᵢ und auf der vertikalen Achse der Ausgangsdruck pₐ dargestellt.

Der Eingangsdruck pᵢ ist somit derjenige, welcher in dem Bremszylinder 10 herrscht. Der Ausgangsdruck pₐ ist derjenige, welcher an den Drucksensor 30 weitergegeben wird.

Wie gezeigt, ist die Druckweitergabe durch den Druckminderer 20 bis zu einem vorbestimmten Druckschwellenwert pₛ zunächst unverändert, d.h. es wird ein erster Modifizierungsfaktor von 1 angewendet. Anders ausgedrückt ist der Eingangsdruck pᵢ gleich dem Ausgangsdruck pₐ.

Oberhalb des vorbestimmten Druckschwellenwerts pₛ ist die dargestellte Kurve jedoch flacher, d.h. es wird ein zweiter Modifizierungsfaktor kleiner 1 verwendet. Der Ausgangsdruck pₐ wird somit im Vergleich zum Eingangsdruck pᵢ abgeschwächt. Es sei verstanden, dass hier der beim vorbestimmten Druckschwellenwert pₛ erreichte Druck als Referenz dient, d.h. der den Druckschwellenwert pₛ übersteigende Druckanteil des Eingangsdrucks pᵢ wird mit dem zweiten Modifizierungsfaktor multipliziert und zum Ausgangsdruck pₐ am Druckschwellenwert hinzuaddiert.

Der vorbestimmte Druckschwellenwert pₛ liegt vorliegend bei 70 bar, wobei der maximal im Bremszylinder zu erwartende Druck bei etwa 270 bar liegt. Durch die dargestellte Übertragungskennlinie des Druckminderers 20 kann ein Drucksensor 30 verwendet werden, welcher nicht bis zu einem Druck von 270 bar ausgelegt sein muss, sondern einen geringeren Messbereich haben kann. Dies erleichtert die Auswahl des Drucksensors 30 erheblich.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen.

Diese Merkmale können auch beliebig mit anderen Merkmalen kombiniert werden.

## Patentansprüche

1. Bremszylinderanordnung (5), aufweisend
- einen Bremszylinder (10),
- einen Drucksensor (30),
- einen Druckminderer (20),
- wobei der Bremszylinder (10) über den Druckminderer (20) mit dem Drucksensor (30) verbunden ist, um einen Druck im Bremszylinder (10) abzufühlen, und
- **dadurch gekennzeichnet, dass** :
der Druckminderer (20)
- in einem ersten Eingangsdruckbereich, welcher von 0 bar bis zu einem vorbestimmten Druckschwellenwert (pₛ) reicht, den Druck vom Bremszylinder (10) zu dem Drucksensor (30) mit einem ersten Modifizierungsfaktor leitet, und
- in einem zweiten Eingangsdruckbereich, welcher Drücke größer als der vorbestimmte Druckschwellenwert (pₛ) umfasst, den Druck, soweit er den Druckschwellenwert (pₛ) übersteigt, vom Bremszylinder (10) zu dem Drucksensor (30) mit einem zweiten Modifizierungsfaktor zuzüglich des am Druckschwellenwert (pₛ) weitergeleiteten Drucks leitet, wobei ein Eingangsdruck am Druckschwellenwert noch mit dem ersten Modifizierungsfaktor weitergeleitet wird und zu dem derart bestimmten weitergeleiteten Druck dann bei höheren Drücken der Druck addiert wird, welcher sich aus dem den Druckschwellenwert übersteigenden Druckanteil multipliziert mit dem zweiten Modifizierungsfaktor bestimmt.

2. Bremszylinderanordnung (5) nach Anspruch 1,
- wobei der vorbestimmte Druckschwellenwert (pₛ) einen Wert zwischen 60 bar und 80 bar oder einen Wert von 70 bar aufweist.

3. Bremszylinderanordnung (5) nach einem der vorhergehenden Ansprüche,
- wobei der erste Modifizierungsfaktor einen Wert von 1 hat.

4. Bremszylinderanordnung (5) nach einem der vorhergehenden Ansprüche,
- wobei der zweite Modifizierungsfaktor einen Wert kleiner 1 hat.

5. Bremszylinderanordnung (5) nach einem der vorhergehenden Ansprüche,
- wobei der Druckminderer (20) ein hydraulischer Druckminderer (20) ist.

6. Bremszylinderanordnung (5) nach einem der vorhergehenden Ansprüche,
- wobei der Bremszylinder (10) ein Hauptbremszylinder eines Kraftfahrzeugs ist.

7. Bremszylinderanordnung (5) nach einem der vorhergehenden Ansprüche,
- wobei der Drucksensor (30) dazu konfiguriert ist, eine Berstschutzfunktion auszulösen, wenn der Druck einen vorgegebenen Sicherheitsschwellenwert erreicht.

8. Bremszylinderanordnung (5) nach Anspruch 7,
- wobei der Sicherheitsschwellenwert einem Eingangsdruck (pᵢ) des Druckminderers (20) zwischen 260 bar und 280 bar, oder 270 bar, entspricht.

9. Bremssystem (1) für ein Kraftfahrzeug, aufweisend
- eine Bremszylinderanordnung (5) nach einem der vorhergehenden Ansprüche, und
- eine Anzahl von Bremsen (40), welche mit dem Bremszylinder (10) der Bremszylinderanordnung (5) verbunden sind.

## Claims

1. Brake cylinder arrangement (5), having
- a brake cylinder (10),
- a pressure sensor (30),
- a pressure reducer (20),
- the brake cylinder (10) being connected via the pressure reducer (20) to the pressure sensor (30), in order to sense a pressure in the brake cylinder (10), and
- **characterized in that**: the pressure reducer (20)
- conducts, in a first inlet pressure range which reaches from 0 bar as far as a predefined pressure threshold value (pₛ), the pressure from the brake cylinder (10) to the pressure sensor (30) with a first modification factor, and
- conducts, in a second inlet pressure range which includes pressures greater than the predefined pressure threshold value (pₛ), the pressure, in so far as it exceeds the pressure threshold value (pₛ), from the brake cylinder (10) to the pressure sensor (30) with a second modification factor plus the pressure which is forwarded at the pressure threshold value (pₛ), an inlet pressure at the pressure threshold value still being forwarded with the first modification factor, and the pressure which is determined from the pressure proportion exceeding the pressure threshold value multiplied by the second modification factor then being added at higher pressures to the forwarded pressure determined in this way.

2. Brake cylinder arrangement (5) according to Claim 1,
- the predetermined pressure threshold value (pₛ) having a value between 60 bar and 80 bar or a value of 70 bar.

3. Brake cylinder arrangement (5) according to either of the preceding claims,
- the first modification factor having a value of 1.

4. Brake cylinder arrangement (5) according to one of the preceding claims,
- the second modification factor having a value of less than 1.

5. Brake cylinder arrangement (5) according to one of the preceding claims,
- the pressure reducer (20) being a hydraulic pressure reducer (20).

6. Brake cylinder arrangement (5) according to one of the preceding claims,
- the brake cylinder (10) being a brake master cylinder of a motor vehicle.

7. Brake cylinder arrangement (5) according to one of the preceding claims,
- the pressure sensor (30) being configured to trigger a rupture protection function if the pressure achieves a predefined safety threshold value.

8. Brake cylinder arrangement (5) according to Claim 7,
- the safety threshold value corresponding to an inlet pressure (pᵢ) of the pressure reducer (20) of between 260 bar and 280 bar, or of 270 bar.

9. Brake system (1) for a motor vehicle, comprising
- a brake cylinder arrangement (5) according to one of the preceding claims, and
- a number of brakes (40) which are connected to the brake cylinder (10) of the brake cylinder arrangement (5).

## Revendications

1. Ensemble cylindre de frein (5), présentant
- un cylindre de frein (10),
- un capteur de pression (30),
- un réducteur de pression (20),
- dans lequel le cylindre de frein (10) est relié au capteur de pression (30) par le biais du réducteur de pression (20), afin de détecter une pression dans le cylindre de frein (10), et
- **caractérisé en ce que** : le réducteur de pression (20)
- dans une première plage de pression d'entrée, laquelle va de 0 bar à une valeur seuil de pression prédéfinie (pₛ), transmet la pression du cylindre de frein (10) au capteur de pression (30) avec un premier facteur de modification, et
- dans une deuxième plage de pression d'entrée, laquelle comprend des pressions supérieures à la valeur seuil de pression prédéfinie (pₛ), transmet la pression, si elle dépasse la valeur seuil de pression (pₛ), du cylindre de frein (10) au capteur de pression (30) avec un deuxième facteur de modification plus la pression transmise à la valeur seuil de pression (pₛ), une plage de pression d'entrée à la valeur seuil de pression étant encore transmise avec le premier facteur de modification et, à des pressions plus élevées, à la pression transmise ainsi déterminée on ajoute la pression qui est déterminée à partir de la composante de pression dépassant la valeur seuil de pression multipliée par le deuxième facteur de modification.

2. Ensemble cylindre de frein (5) selon la revendication 1,
- dans lequel la valeur seuil de pression prédéfinie (pₛ) présente une valeur entre 60 bar et 80 bar ou une valeur de 70 bar.

3. Ensemble cylindre de frein (5) selon l'une des revendications précédentes,
- dans lequel le premier facteur de modification a une valeur de 1.

4. Ensemble cylindre de frein (5) selon l'une des revendications précédentes,
- dans lequel le deuxième facteur de modification a une valeur inférieure à 1.

5. Ensemble cylindre de frein (5) selon l'une des revendications précédentes,
- dans lequel le réducteur de pression (20) est un réducteur de pression hydraulique (20).

6. Ensemble cylindre de frein (5) selon l'une des revendications précédentes,
- dans lequel le cylindre de frein (10) est un maître-cylindre de frein d'un véhicule automobile.

7. Ensemble cylindre de frein (5) selon l'une des revendications précédentes,
- dans lequel le capteur de pression (30) est conçu pour déclencher une fonction de protection contre l'éclatement lorsque la pression atteint une valeur seuil de sécurité prédéfinie.

8. Ensemble cylindre de frein (5) selon la revendication 7,
- dans lequel la valeur seuil de sécurité correspond à une pression d'entrée (pᵢ) du réducteur de pression (20) entre 260 bar et 280 bar, ou 270 bar.

9. Système de freinage (1) pour un véhicule automobile, présentant
- un ensemble cylindre de frein (5) selon l'une des revendications précédentes, et
- un nombre de freins (40), lesquels sont reliés au cylindre de frein (10) de l'ensemble cylindre de frein (5).
